# EUROPEAN PATENT APPLICATION

(11) **EP 2 007 018 A2**
(43) Date of publication of application: **24.12.2008**
(21) Application number: 07714928.4
(22) Date of filing: 26.02.2007
(51) Int. Cl.: H04B 1/40, H04M 1/00, H04Q 7/38

(54) **MOBILE COMMUNICATION TERMINAL DEVICE AND TRANSMITTING RIGHT SETTING METHOD IN MOBILE COMMUNICATION TERMINAL DEVICE**

(30) Priority: 01.03.2006 JP 2006054626
(71) Applicant: NEC Corporation, Minato-ku Tokyo 108-8001 (JP)
(72) Inventor: TAMURA, Kengo, Tokyo 108-8001 (JP)
(74) Representative: Glawe, Delfs, Moll
(86) International application number: PCT/JP2007/053496
(87) International publication number: WO 2007/099899

(57) **Abstract**

A mobile communication terminal device and a transmittable period setting method in the mobile communication terminal device capable of extending a period during which information may be transmitted, even while the information is transmitted using a push-to-talk system. When a PTT button 52 is depressed, a CPU 10 refers to a working memory 30 and checks a state of a speech right. When a mobile phone handset does not acquire the speech right, the CPU 10 executes processing of acquiring the speech right and sets a speech right acquisition period to ten seconds. When the mobile phone handset acquires the speech right, the CPU 10 acquires a speech right acquisition period stored in the working memory 30, and adds ten seconds to the acquired speech right acquisition period. The CPU 10 sets the calculated value in the working memory 30 as a speech right acquisition period.

## Description

### TECHNICAL FIELD

The present invention relates to a push-to-talk mobile communication terminal device capable of transmitting information when a push-to-talk button is depressed and a transmitting right setting method in the mobile communication terminal device.

### BACKGROUND ART

As a function of cellular phones, there is a call function using a Push to talk (hereinafter referred to as "PTT") system. Since the PTT system is based on half-duplex communication, the number of terminals having a speech right is invariably one. The half-duplex communication is a communication method in which communication is performed using one communication channel while transmission and reception are switched over. In order to make a call using the PTT system, a talker (talking party) depresses a PTT button, thereby acquiring the speech right. While the talker keeps on depressing the PTT button, he can speak. When the talker releases the PTT button, he cannot speak. Incidentally, Push to talk is also referred to as press talk.

As a wireless communication system including a base station device and a plurality of mobile station devices, in which wireless communication is performed between the base station device and each of the mobile station devices by a simplex operation, a system capable of facilitating a transmitting right acquiring operation for a user of the mobile station device is proposed (refer to Patent Document 1, for example). As the transmitting right acquiring operation, a depressing operation of a press button may be pointed out. Patent Document 1 describes that continuous acquisition of a transmitting right is performed by successively depressing twice (double clicking) the press button. Patent Document 1 also describes provision of the press button including mechanical engaging means and that continuous acquisition of the transmitting right is performed when the press button is fixed, being kept depressed by an engaging portion. With these arrangements, an operation related to the depressing operation of the press button may be simplified.

A press-talk call control device capable of selecting one of two speaking methods in accordance with an operation for a press-talk switch is proposed (refer to Patent Document 2, for example). Patent Document 2 describes that when a on-time t1 of the press-talk switch is shorter than a predetermined period t, continuous speaking is selected, and when the on-time t1 of the press-talk switch is longer than the predetermined period t, temporary speaking is selected. With this arrangement, selection between the continuous speaking and the temporary speaking may be made by a simple operation.

Patent Document 1: JP Patent Kokai Publication No. JP-P2005-236611A (paragraphs 0031-0034)
Patent Document 2: JP Patent Kokai Publication No. JP-A-5-175878 (paragraphs 0015-0023)

### DISCLOSURE OF THE INVENTION

### PROBLEMS TO BE SOLVED BY THE INVENTION

Disclosed contents of the Patent Documents listed above are each incorporated by reference thereto.
The system described in Patent Document 1, however, has a configuration in which by double clicking the press button or fixing the press button using the engaging portion against a failure of acquisition of the transmitting right, a request for acquiring the transmitting right is transmitted again when the transmitting right could not be acquired. For this reason, there is a problem that after the transmitting right has been acquired, an actually talkable period cannot be extended.

The system described in Patent Document 2 has a configuration in which when the press-talk switch is depressed for a period shorter than the predetermined period, continuous speaking is selected, and thereafter when the press-talk switch is depressed again, a call connection state is released. For this reason, there is a problem that a user must operate after having determined whether the continuous speaking is to be made or not at a time of starting a call.

It is an object of the present invention, therefore, to provide a mobile communication terminal device and a transmitting right setting method in the mobile communication terminal device, capable of extending a period during which information may be transmitted even while the information is being transmitted using a push-to-talk system.

### MEANS FOR SOLVING THE PROBLEMS

According to a first aspect of the present invention, there is provided a mobile communication terminal device that transmits information to other terminal device by half-duplex communication, in response to a depression of a button. The mobile communication terminal device comprises:
transmitting right acquisition period setting means for setting a transmitting right acquisition period longer than a depression period of the button and allowing transmission of the information when the button has been depressed; and
transmitting right acquisition period extending means for extending the transmitting right acquisition period when the button has been depressed again before the transmitting right acquisition period elapses.

The transmitting right acquisition period extending means may add a predetermined period to the transmitting right acquisition period. With such an arrangement, the transmitting right acquisition period can be extended by the predetermined period whenever the push-to-talk button is depressed.

The mobile communication terminal device may include transmitting right releasing means for releasing a transmitting right when the transmitting right acquisition period has elapsed. With such an arrangement, the transmitting right is automatically released when the transmitting right acquisition period has elapsed.

The mobile communication terminal device may include immediately preceding transmitting right acquisition period measuring means for measuring an immediately preceding transmitting right acquisition period from acquisition of the transmitting right to release of the transmitting right, and then storing the measured immediately preceding transmitting right acquisition period in storage means. The transmitting right acquisition period setting means may set the stored immediately preceding transmitting right acquisition period as a transmitting right acquisition period. With such an arrangement, an operation of depressing the push-to-talk button so as to extend the transmitting right acquisition period can be reduced.

The mobile communication terminal device may include operation signal input means for receiving an operation signal from an external device connected to the mobile communication terminal device. When the operation signal has been received, the transmitting right acquisition period setting means and the transmitting right acquisition period extending means may also operate respectively, regarding reception of the operation signal as a depression of the button. With such an arrangement, a switch of the external device such as an earphone may be used in place of the push-to-talk button.

According to a second aspect of the present invention, there is provided a transmitting right setting method for a mobile communication terminal device that transmits information to other terminal device by half-duplex communication, in response to a depression of a button. The method comprises the steps of:
setting a transmitting right acquisition period longer than a depression period of the button and allowing transmission of the information when the button has been depressed, by the mobile communication terminal device; and
extending the transmitting right acquisition period when the button has been depressed again before the transmitting right acquisition period elapses, by the mobile communication terminal device.

### EFFECTS OF THE INVENTION

According to the present invention, there is an effect that a speaker (talking party) can increase the speech right acquisition period even while he is speaking. There is also an effect that the speaker can speak without keeping on depressing the PTT button, and when a predetermined period has elapsed, the speech right of the talker is automatically released.

### BRIEF DESCRIPTION OF THE DRAWINGS

Fig. 1 is a block diagram showing a first exemplary embodiment of a mobile communication terminal device according to the present invention;
Fig. 2 is a front view showing an example of a mobile (cellular) phone handset according to the present invention;
Fig. 3 is a sequence diagram showing an example of an operation of acquiring a speech right and then releasing the speech right by the mobile phone terminal (handset);
Fig. 4 is a flowchart showing an operation of the mobile phone terminal when a PTT button has been depressed, in the first exemplary embodiment;
Fig. 5 is a flowchart showing an operation of the mobile phone terminal from when a speech right acquisition period has been set to when the speech right is released, in the first exemplary embodiment;
Fig. 6 is a flowchart showing an operation of the mobile phone terminal when the PTT button has been depressed, in a second exemplary embodiment; and
Fig. 7 is a flowchart showing an operation of a mobile phone terminal from a time a speech right acquisition period has been set and to a time the speech right is released, in the second exemplary embodiment.

### DESCRIPTION OF REFERENCE NUMERALS

- 10: CPU
- 20: ROM
- 30: working memory
- 40: transmitting/receiving unit
- 50: input unit

- 51: input keys
- 52: PTT button
- 60: display control unit
- 61: display unit
- 70: microphone
- 80: loudspeaker
- 90: bus

### PREFERRED MODES FOR CARRYING OUT THE INVENTION

### First Exemplary embodiment.

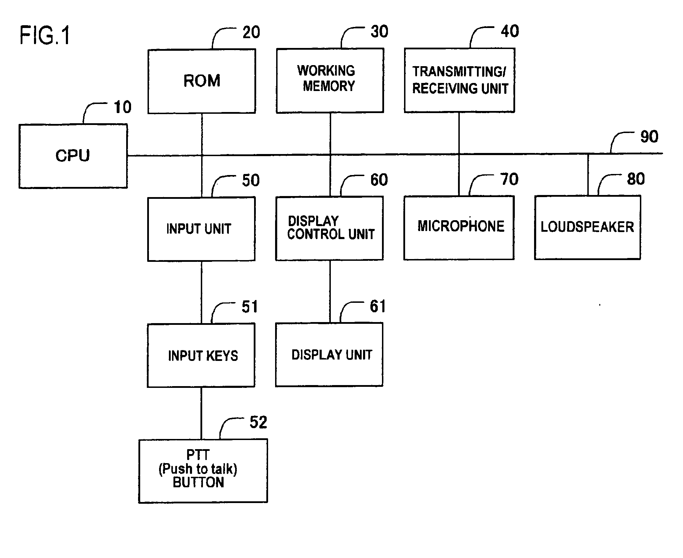

A first exemplary embodiment of the present invention will be described with reference to drawings. Fig. 1 is a block diagram showing the first exemplary embodiment of a mobile communication terminal device according to the present invention. The mobile communication terminal device shown in Fig. 1 includes a CPU 10, a ROM (Read Only Memory) 20, a working memory 30, a transmitting/receiving unit 40, an input unit 50, input keys 51, a PTT button 52, a display control unit 60, a display unit 61, a microphone 70, a loudspeaker 80, and a bus 90. The CPU 10 is connected to each unit through the bus 90.

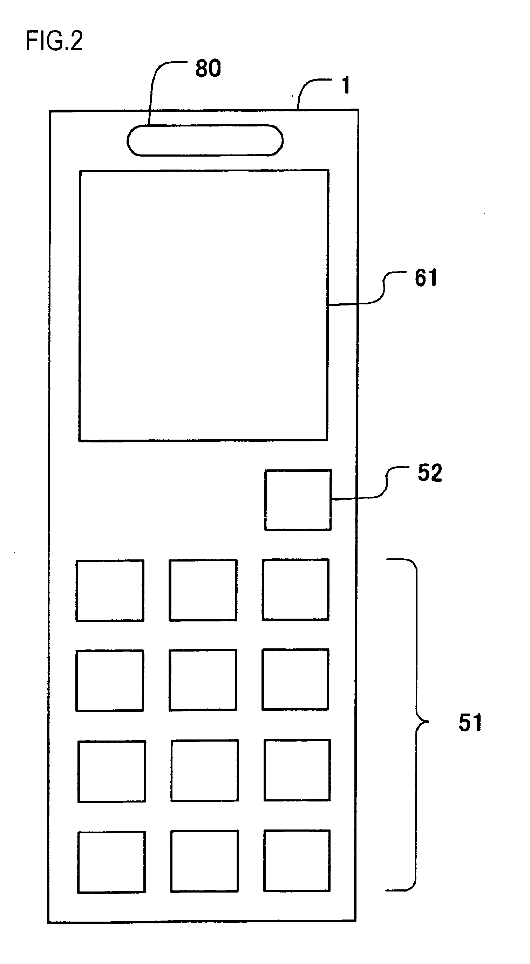

In the following description, a mobile phone handset will be exemplified as the mobile communication terminal device according to the present invention. Fig. 2 is a front view showing an example of a mobile phone handset 1 according to the present invention. The mobile phone handset 1 shown in Fig. 2 includes the PTT button 52, input keys 51, loudspeaker 80, and display unit 61.

The CPU 10 is a control device that exercises control over respective portions of the mobile phone handset 1. The CPU 10 executes various control over a call, mail transmission and reception, internet connection, and the like. The CPU 10 further executes processing of requesting acquisition of a speech right (transmitting right) in the call using a PTT system to a base station.

Various control programs to be executed by the CPU 10 such as a setting application for performing various settings of the mobile phone handset 1 and a mailer application that executes mail transmission and reception are stored in the ROM 20 in advance.

The working memory 30 is implemented by a RAM (Random Access Memory), for example. The working memory 30 stores data to be temporarily used when the CPU 10 executes a program. The working memory 30 further stores information indicating whether the mobile phone handset 1 has acquired the speech right and a speech right acquisition period (transmittable period) indicating a remaining period until the speech right is released.

The transmitting/receiving unit 40 performs wireless communication with the base station for the wireless communication through an antenna.

The input unit 50 includes the input keys 51 such as a numeric key, a scroll key, and a determination key for receiving information. The input unit 50 detects input through one of the input keys 51 and outputs the input to the CPU 10. The input unit 50 further includes the PTT button 52. By depressing or keeping on depressing the PTT button 52, the input unit 50 may acquire the speech right.

The display control unit 60 is a control circuit that exercises control of displaying various information on the display unit 61. The display unit 61 is implemented by a display device such as a liquid crystal display device or an organic EL (Electroluminescence) display device, for example, and displays information.

The microphone 70 is a voice input device for making a call. The loudspeaker 80 is a received voice output device for making the call. The loudspeaker 80 outputs an incoming sound or the like for notifying reception of an incoming phone call or arrival of a mail.

In this exemplary embodiment, transmitting right acquisition period setting means, time lapse determination means, transmitting right acquisition period extending means, transmitting right releasing means, and operation signal input means are implemented by the CPU 10 and control programs for the CPU 10.

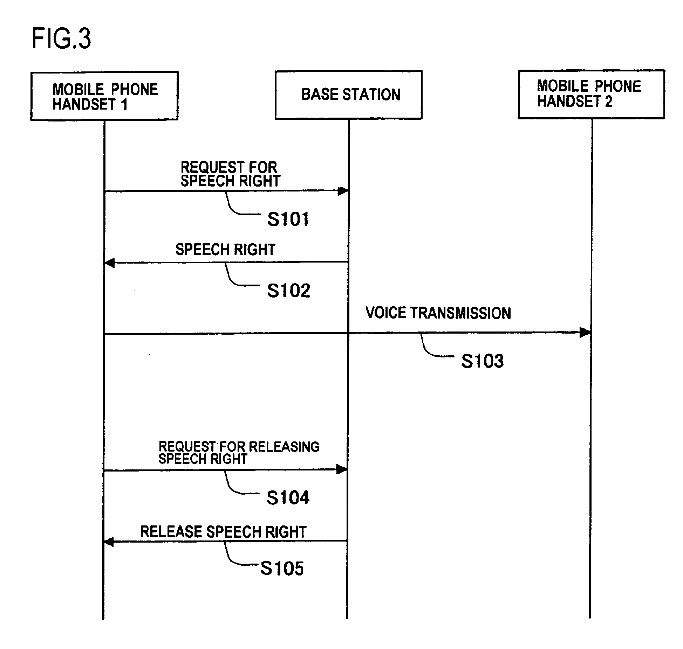

Next, referring to the drawings, an operation of this exemplary embodiment will be described. Fig. 3 is a sequence diagram showing an example of an operation in which the mobile phone handset 1 acquires a speech right (transmitting right) and then releases the speech right. In the following description, a case where the mobile phone handset 1 transmits voice information (for speaking) will be exemplified. Information to be transmitted by the mobile phone handset 1 is not limited to the voice information. The mobile phone handset 1 may transmit character information or image information.

When communication using the PTT system is performed, or when the PTT button 52 is depressed, the mobile phone handset 1 specifies a mobile phone handset 2 of a call destination, and requests the speech right to the base station (in step S101). The mobile phone handset 2 is the one capable of performing the communication using the PTT system.

When the mobile phone handset 2 [sic. 1] does not acquired the speech right, the base station gives a speech right to the mobile phone handset 1 (in step S102). When the speech right is given, the mobile phone handset 1 can transmit voice to the mobile phone handset 2 for a predetermined period set as the speech right acquisition period (in step S103).

The speech right acquisition period is a period during which the mobile phone handset 1 can transmit the voice to the mobile phone handset 2, and indicates a value which will be subtracted with a lapse of time. It means that the speech right acquisition period indicates the value showing a remaining period during which the mobile phone handset 1 can transmit the voice.

When the speech right acquisition period is reduced to zero, the mobile phone handset 1 requests release of the speech right to the base station (in step S104). The base station releases the speech right (in step S105).

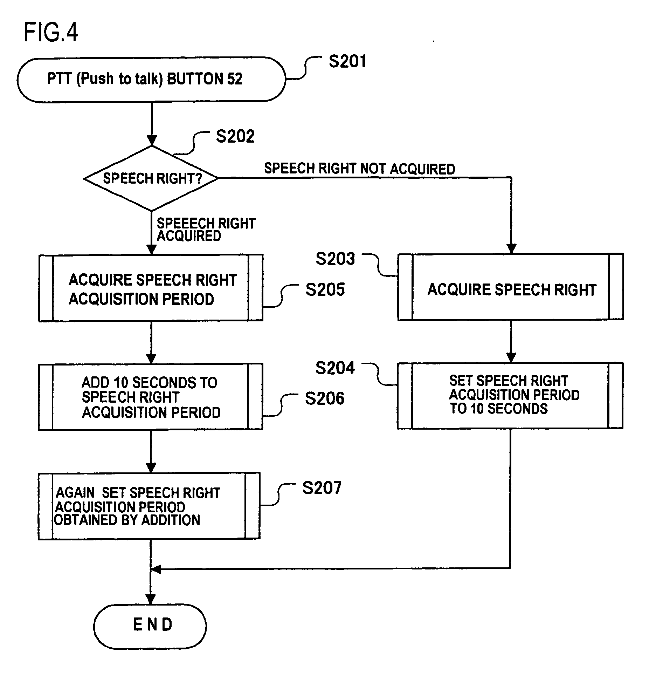

Fig. 4 is a flowchart showing an operation of the mobile phone handset 1 when the PTT button 52 in the first exemplary embodiment has been depressed. When the PTT button 52 is depressed, the speech right acquisition period is set, according to whether the speech right has been already acquired or not, and voice transmission is allowed.

When the PTT button 52 is depressed (in step S201), the CPU 10 checks a state of the speech right, by referring to the working memory 30 (in step S202). When it is found in step S202 that the mobile phone handset 1 has not acquired the speech right , the CPU 10 executes processing of acquiring the speech right (from step S101 to S102) (in step S203), and sets the speech right acquisition period to 10 seconds (in step S204). When it is found in step S202 that the mobile phone handset 1 has acquired the speech right, the CPU 10 acquires a speech right acquisition period stored in the working memory 30 (in step S205), and adds 10 seconds to the acquired speech right acquisition period (in step S206). The CPU 10 sets the value calculated in step S206 in the working memory 30 as a speech right acquisition period (in step S207).

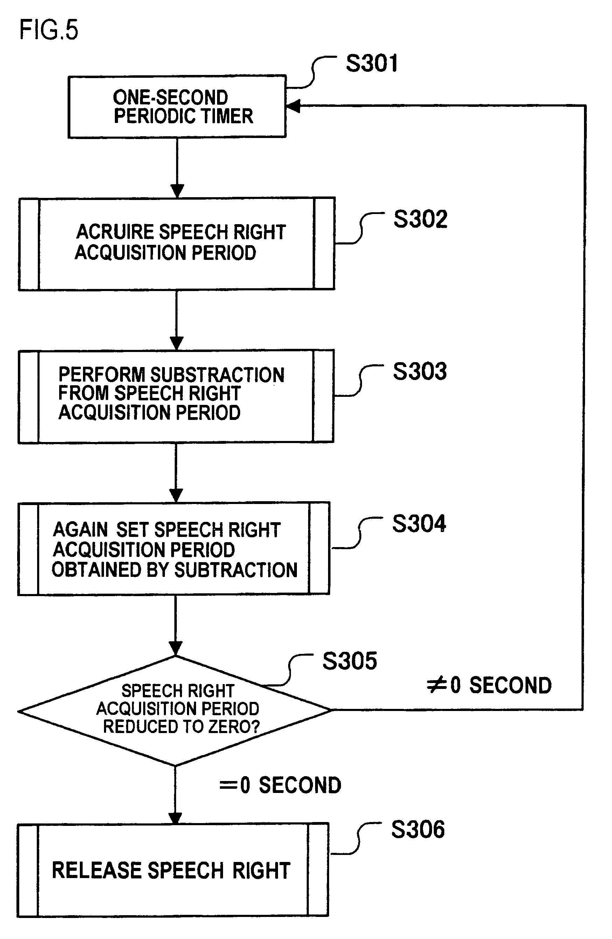

Fig. 5 is a flowchart showing an operation of the mobile phone handset 1 from when the speech right acquisition period has been set to when the speech right is released, in the first exemplary embodiment. In other words, the operation of the mobile phone handset 1 when the speech right acquisition period has been set in step S204 and step S207 will be described.

When the speech right acquisition period has been set in step S204 and step S207, the CPU 10 detects a lapse of one second by a one-second periodic timer function (in step S301), and also obtains the speech right acquisition period stored in the working memory 30 (in step S302). The CPU 10 subtracts one second from the speech right acquisition period acquired in step S302 (in step S303).

The CPU 10 sets the value calculated in step S303 as the speech right acquisition period in the working memory 30 (in step S304), and determines whether the value calculated in step S303 is zero seconds or not (in step S305). When a determination result is zero seconds in step S305, the CPU 10 executes processing for releasing the speech right (in step S306). When the determination result is not zero seconds in step S305, the CPU 10 executes no processing. Then, the operation moves to step S301, and the CPU 10 carries on the processing.

That is, when a speech period is expected to be within ten seconds, the speech right can be acquired just by depressing the PTT button once. Then, a phone speech can be made. Then, after the 10 seconds, the speech right is automatically released. When the speech period is expected to exceed the ten seconds while the PTT button is depressed once and the phone speech is made, the speech right acquisition period can be extended by depressing the PTT button again before the speech right acquisition period is reduced to zero seconds. Then, when the speech right acquisition period is left unchanged after the phone speech has been made, the speech right acquisition period is reduced to zero seconds, so that the speech right is automatically released.

In this exemplary embodiment, the case where the PTT button included in the mobile phone handset is depressed was exemplified. The PTT button may be replaced by a switch included in an external device such as an earphone connected to the mobile phone handset. In this case, the CPU 10 receives a signal from the external device, and executes the same processing as in the case where the PTT button has been depressed.

In this exemplary embodiment, the case where the CPU 10 sets the speech right acquisition period to ten seconds and also adds 10 seconds to the speech right acquisition period was exemplified. The speech right acquisition period may be set to a period other than 10 seconds. Further, a set value of the speech right acquisition period when the speech right is not acquired may be different from a set value of the speech right acquisition period when the speech right is acquired.

As described above, the first exemplary embodiment is so configured that, when the PTT button is depressed, the speech right is acquired and the speech right acquisition period may be set to a predetermined period. The first exemplary embodiment is also so configured that, when the PTT button is depressed again while the speech right is acquired, the predetermined period may be added to the speech right acquisition period, and the speech right acquisition period may be set again. A speaker can increase the speech right acquisition period even while he is speaking. He can also speak without keeping on depressing the PTT button, and the speech right of the speaker is automatically released when a predetermined period has elapsed.

### Second Exemplary Embodiment.

Next, a second exemplary embodiment will be described with reference to drawings. In the first exemplary embodiment, exemplification was given on the case where the speech right acquisition period is set to and fixed at 10 seconds when the speech right is not acquired. In the second exemplary embodiment, the speech right acquisition period is set to a period from a time the speech right has been acquired to a time the speech right is released, in an immediately preceding speech. Same reference numerals as those in Figs. 4 and 5 are assigned to operations that are the same as those in the first exemplary embodiment, and description of the same operations will be omitted.

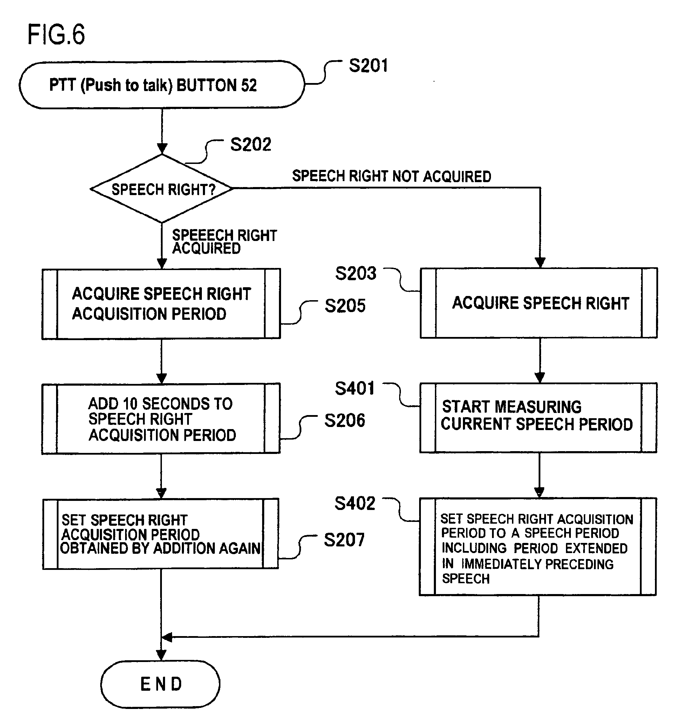

Fig. 6 is a flowchart showing an operation of the mobile phone handset 1 when the PTT button 52 has been depressed, in the second exemplary embodiment.

When the PTT button 52 was depressed in step S201 and the mobile phone handset has not acquired the speech right in step S202, the CPU executes processing of acquiring the speech right (in step S203), and starts measuring a current speech period T2 (in step S401). The current speech period T2 is a period from a time a speech right has been acquired to a time the speech right is released, in a current speech. The current speech period T2 is zero in step S401.

The CPU 10 sets an immediately preceding speech period T1, as a speech right acquisition period (in step S402). The immediately preceding speech period T1 indicates a value that has been already measured, and is a speech period including a period extended in an immediately preceding speech. In other words, the immediately preceding speech period T1 is a period from a time the speech right was acquired to a time the speech right was released in the immediately preceding speech. Incidentally, when the immediately preceding speech period T1 is not set as in the case of a phone speech for the first time or the like, a predetermined period may be set as the immediately preceding speech period T1.

In this exemplary embodiment, immediately preceding transmission right acquisition period measuring means is implemented by the CPU 10.

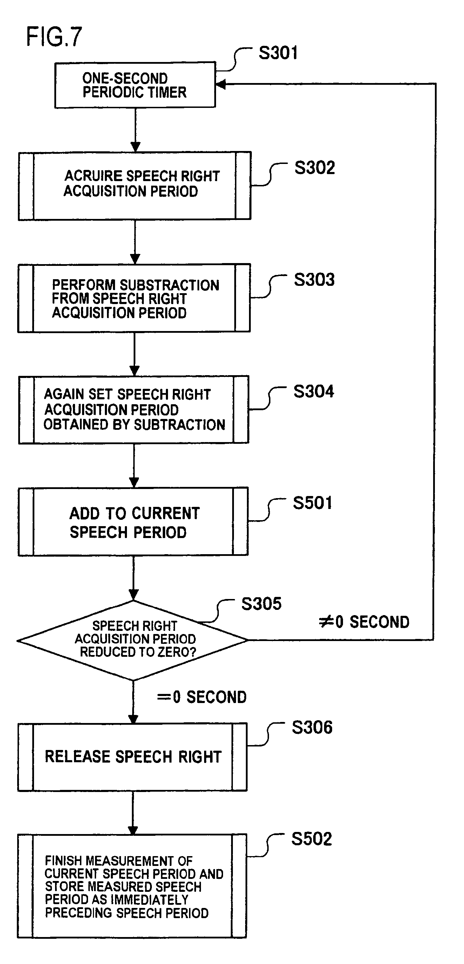

Next, an operation of setting the immediately preceding speech period T1 will be described. Fig. 7 is a flowchart showing an operation of the mobile phone handset 1 from when the speech right acquisition period has been set to when the speech right is released, in the second exemplary embodiment.

When the speech right acquisition period is set in step S402, the CPU 10 detects a lapse of one second by the one-second periodic timer function (in step S301), and also acquires a speech right acquisition period (in step S302). The CPU 10 subtracts one second from the acquired speech right acquisition period (in step S303) and sets the calculated value as a speech right acquisition period (in step S304). The CPU 10 adds one second to the current speech period T2 (in step S501).

The CPU 10 determines whether the value calculated in step S303 is zero seconds or not (in step S305). When a determination result is zero seconds, the CPU 10 performs processing for releasing the speech right (in step S306). Then, the operation moves to step S502. When the determination result is not zero seconds in step S305, the CPU 10 performs no processing, and the operation moves to step S301. Then, the CPU 10 carries on the processing.

The CPU 10 finishes measurement of the current speech period T2 in step S502, sets the current speech period T2 as an immediately preceding speech period T1, and finishes a sequence of processing. When the current speech period T2 is 15 seconds, for example, the CPU 10 sets the immediately preceding speech period T1 to 15 seconds.

As described above, the second exemplary embodiment described above sets the speech right acquisition period according to an immediately preceding speech period. Thus, in addition to the effects of the first exemplary embodiment, there is an effect that the operation of depressing the PTT button for extending the speech right acquisition period can be reduced.

The above description has been given on the preferred modes for carrying out the invention. Various variations and combinations are possible within the scope not departing from the gist of the invention. The gist of the invention is that when the button has been depressed, the transmitting right acquisition period longer than the period during which the button has been depressed is set, and information transmission is allowed, and when the button has been depressed again before the transmitting right acquisition period elapses, the transmitting right acquisition period is extended.

### INDUSTRIAL APPLICABILITY

The present invention can be effectively applied to a mobile communication terminal device capable of performing wireless communication using a push-to-talk system.
Alterations and adjustments of the exemplary embodiments or embodiments are possible within the overall disclosure of the present invention (including claims) and based on a technical concept of the present invention. Various combinations or selections of various disclosed elements are possible within the scope of the claims of the present invention.

## Claims

1. A mobile communication terminal device that transmits information to other terminal device by half-duplex communication, in response to a depression of a button, said mobile communication terminal device comprising:
transmitting right acquisition period setting means for setting a transmitting right acquisition period longer than a depression period of said button and allowing transmission of the information when said button has been depressed; and
transmitting right acquisition period extending means for extending the transmitting right acquisition period when said button has been depressed again before the transmitting right acquisition period elapses.

2. The mobile communication terminal device according to claim 1, wherein said transmitting right acquisition period extending means extends the transmitting right acquisition period according to a number of depressions of said button before the transmitting right acquisition period elapses.

3. The mobile communication terminal device according to claim 1 or 2, further comprising:
transmitting right releasing means for releasing a transmitting right when the transmitting right acquisition period has elapsed.

4. The mobile communication terminal device according to any one of claims 1 through 3, further comprising:
immediately preceding transmitting right acquisition period measuring means for measuring a transmitting right acquisition period and then storing the measured transmitting right acquisition period in storage means;
said transmitting right acquisition period setting means setting the immediately preceding transmitting right acquisition period as a transmitting right acquisition period.

5. The mobile communication terminal device according to any one of claims 1 through 4, further comprising:
operation signal input means for receiving an operation signal from an external device;
said transmitting right acquisition period setting means and said transmitting right acquisition period extending means operating respectively, regarding reception of the operation signal as a depression of said button.

6. A transmitting right setting method for a mobile communication terminal device that transmits information to other terminal device by half-duplex communication, in response to a depression of a button, the method comprising the steps of:
setting a transmitting right acquisition period longer than a depression period of said button and allowing transmission of the information when said button has been depressed, by said mobile communication terminal device; and
extending the transmitting right acquisition period when said button has been depressed again before the transmitting right acquisition period elapses, by said mobile communication terminal device.
